# EUROPEAN PATENT APPLICATION

(11) **EP 3 246 896 A2**
(43) Date of publication of application: **22.11.2017**
(21) Application number: 16737332.3
(22) Date of filing: 12.01.2016
(51) Int. Cl.: G09B 5/06, G09B 19/00

(54) **AUTONOMOUS LEARNING SYSTEM USING VIDEO/AUDIO CLIPS**

(30) Priority: 13.01.2015 JP 2015004319
(71) Applicant: Genex Solutions, Inc., Tokyo 108-0073 (JP)
(72) Inventor: TAKAHASHI Hayato, Tokyo 108-0073 (JP); KANEDA Yoshihito, Tokyo 108-0073 (JP); TANAKA Nobuyuki, Tokyo 108-0073 (JP); ENDO Michio, Tokyo 108-0073 (JP)
(74) Representative: Grünecker Patent- und Rechtsanwälte PartG mbB
(86) International application number: PCT/JP2016/050707
(87) International publication number: WO 2016/114261

(57) **Abstract**

[Problem] To provide an online learning system in which learning outcome content output by learners is used without modification as teaching content for other learners, and teaching content is developed and improved in an autonomous manner without management by a system administrator.

[Solution] In this invention, video/audio content materials (referred to herein as "video/audio clips") of small units having a certain significance and typically having a length from several seconds to several tens of seconds are used as learning/teaching content, and video/audio clips of images and recordings of learners themselves implementing learning content are collected. The video/audio clips are used not only as material for measuring the degree of learning achieved, but also as learning/teaching content.

## Description

### Technical Field

The present invention relates to a learning system using video/audio clips as teaching/learning materials on a computer system, and more particularly to a learning system in which teaching/learning material content get autonomously developed and improved without being managed by a system administrator.

### Background Art

A clip is a small unit of material constituting video/audio content which typically comprises video/audio content having a length of several seconds to several tens of seconds. Hereinafter, an video/audio clip includes a clip containing video content only, a clip containing audio content only and a clip containing video content and audio content.

With the rapid expansion of computer networks, computer equipments and mobile equipments , video/audio content has come to be easily utilized personally for various purposes. With this change, not only the creator side but also the Internet users who were formerly on the recipient side have come to distribute the video/audio content filmed and recorded by themselves in their everyday life.

Under such circumstances, it has become common to utilize video/audio content as teaching/learning materials. For example, disclosed in the below-referenced Patent Document1 is an online learning system in which a teacher distributes teaching/ learning materials made in the form of video/audio content to learners, the learners learn by viewing the video/audio content, the learners feedback the result of the learning to the teacher for the teacher to measure learning achievement and the learners evaluates the quality of the teaching/learning materials.

### <Prior Art Documents>

### Patent Document

Patent Document 1: Japanese Patent Laid-open No. 2003-6348.

### Disclosure of the Invention

### <Problems to be Solved by the Invention>

In the online learning system disclosed in the Patent Document1, however, it constantly costs the distributor (or the teacher) to produce the teaching/learning materials to be distributed to the learners, to process the result of the learning and the feedbacks received from the learners, to evaluate their learning achievement and to improve the teaching/learning materials based on the outputs from the learners. As such, the online learning system requires enormous human and economic resources on the distributor's (teacher's) side such that the online learning system remains interactive and effective.

In consideration of the above inconveniences of the prior art online learning system, it is an object of the present invention to provide an online learning system in which not only the distributor' s side provides teaching/learning materials to the learners, but also the learners can output their the learning achievement so as to serve as teaching/learning materials for other learners and in which teaching/learning material content get autonomously developed and improved without being managed by a system administrator.

### <Means for Solving the Problems>

As a result of earnest study in consideration of the above problem, the inventors focused on a small unit of material constituting video/audio content typically having a length of several seconds to several tens of seconds and presenting a certain concept (hereinafter referred to as "clip") which can be used as teaching/learning material content. The inventors have devised a scheme to collect video/audio clips which the learners produce by filming/recording their own conduct of learning and to utilize the collected video/audio clips not only as a means of measuring learning achievement of the learners but also as new teaching/learning material content for other learners. Thus, the present invention has been accomplished.

According to the present invention, there is provided an autonomous learning system using video/audio clips for learning comprising: a user terminal having communication function, function for reproducing a video/audio clip for learning and function for generating output data corresponding to the video/audio clip and presenting a learning achievement of a learner by learning using the video/audio clip; and a content server having a video/audio clip database storing video/audio clip data, a distribution unit distributing to the user terminal the video/audio clip data stored in the video/audio clip database, a receiving unit receiving the output data sent from the user terminal and an output evaluating unit evaluating the learning achievement of the output data and storing in the video/audio clip database the output data achieving a certain level of skill as a new video/audio clip for learning.

The system according to the present invention is also characterized in that the output evaluating unit evaluates the received output data by receiving input of evaluation of the output data by an evaluator who has viewed the output data.

With the help of human intelligence, the system can make scrupulous and comprehensive evaluation.

Alternatively, the output evaluating unit may evaluate the received output data based on a predetermined evaluation standard, for example, by implementing comparative analysis with a model video/audio data, image analysis or sound analysis.

The system according to the present invention is also characterized in that the content server lays open the output data achieving a certain level of skill to user terminals other than the user terminal which provided the output data.

This enables the other users to utilize model performance shown in the output data.

The system according to the present invention is also characterized in that the content server lays open the output data received from one user terminal to other user terminals so as to receive evaluation of or comments on the output data from the other user terminals.

The system according to the present invention is also characterized in that the output evaluating unit evaluates the output data based on whether the evaluation of the received output data by other user terminals clears a predetermined standard.

Without requiring the help of human intelligence, the learners' output data get autonomously evaluated and the users' learning get proceeds.

The system according to the present invention is also characterized in that the video/audio clip database does not store any video/audio clip data in its initial state and begins to store the output data received from the user terminals and evaluated to be achieving a certain level of skill by the output evaluating unit as a video/audio clip for learning.

This enables it to constitute an autonomous learning system in which the learners by themselves produce excellent teaching/learning material content which can be used by the other learners without requiring the distributor's (teacher's) side to produce and provide video/audio clips to be used as teaching/learning materials.

The system according to the present invention is also characterized in that the content server further comprises a user information database storing user attribute information and learning curriculum information and a progress management unit distributing to the user video/audio clips for learning based on the learning curriculum information and managing the user's progress of learning.

The system according to the present invention is also characterized in that the user terminals have function for filming/recording video/audio content equipped internally or externally so as to produce output data by filming/recording the actions of the user in imitation of the actions shown/heard in the video/audio clips for learning.

### Effects of the Invention

As described in the above, the present invention provides an online learning system in which not only the distributor's side provides teaching/learning materials to the learners, but also the learners can output their the learning achievement so as to serve as teaching/learning materials for other learners and in which teaching/learning material content get autonomously developed and improved without being managed by a system administrator.

### Brief Description of the Drawings

Fig.1 is a schematic view showing an autonomous learning system using video clips according to an embodiment of the present invention.
Fig.2 is a schematic view showing internal structure of a content server of the autonomous learning system using video clips according to the embodiment of the present invention.
Fig.3 is a view showing an example of a screen display of a video clip used in the autonomous learning system using video clips according to the present invention.
Fig.4 is a flow chart schematically showing the sequential steps of use of the autonomous learning system using video clips according to the present invention.
Fig. 5 is a view showing an example of a screen display while leaning using a video clip provided by the autonomous learning system using video clips according to the present invention.
Fig.6 is a view showing an example of a screen display while leaning using a video clip provided by the autonomous learning system using video clips according to the present invention.
Fig.7 is a view showing an example of a screen display while leaning using a video clip provided by the autonomous learning system using video clips according to the present invention.
Fig.8 is a view showing an example of a screen display while leaning using a video clip provided by the autonomous learning system using video clips according to the present invention.

### Best Mode for Carrying Out the Invention

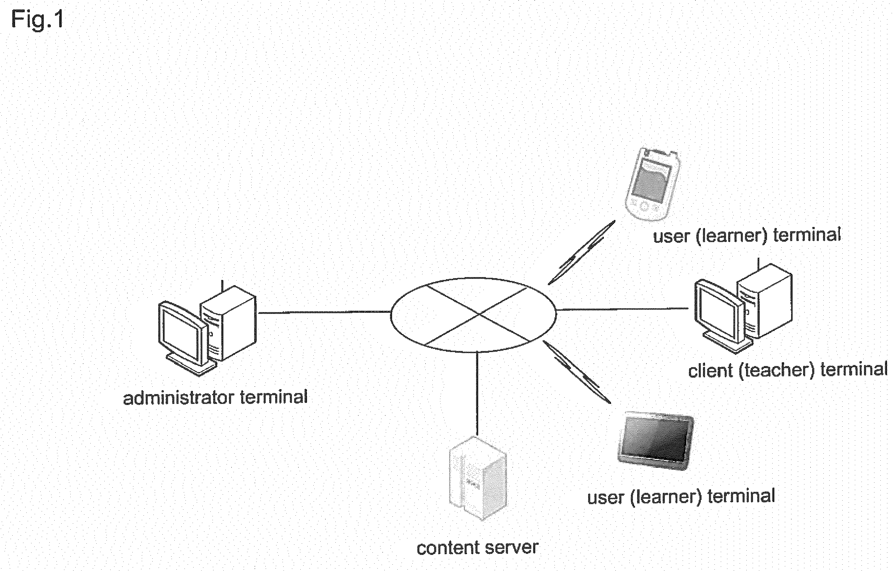

Described hereinafter in detail with reference to the attached figures are the best mode for carrying out an autonomous learning system using video/audio clips according to the present invention. In the Figs. 1 to 8 illustrating exemplary embodiments of the present invention, like reference numerals refer to like members which have similar basic composition and operation.

### System Configuration

Fig. 1 is a schematic view showing an autonomous learning system using video clips according to an embodiment of the present invention. Although the examples using video clips (i. e. clips containing video and audio content) are hereinafter described, the present invention also applies to those using clips containing video content only and audio content only.

As shown in Fig.1, the autonomous learning system using video clips according to the present invention comprises a content server for storing, processing and distributing video clips used as teaching/learning material content, an administrator terminal for administrating and operating the content server, user terminals for receiving video clips from the content server, utilizing the clips for learning and giving feedback to the content server and a client terminal used by teachers (evaluators).

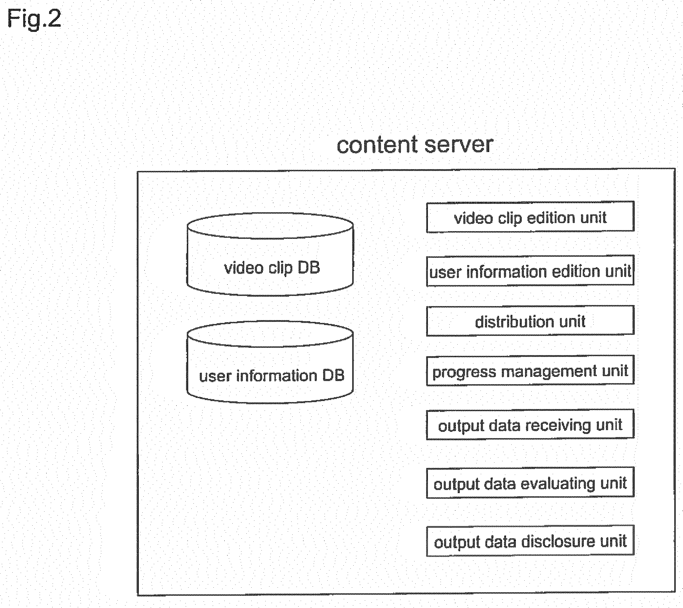

Fig.2 is a schematic view showing the internal structure of the content server shown in Fig.1.

In Fig.2, the content server comprises a video clip database storing video clip data, a user information database storing user information, a video clip edition unit for registering and editing video clips in the video clip database, a user information edition unit for registering user information in the user information database, a distribution unit for distributing to the user terminals video clips stored in the video clip database, a progress management unit for managing the user's progress of learning using the distributed video clips, an output receiving unit for receiving the output data from the users' learning, an output evaluating unit for evaluating the learning achievement of the received output data and an output disclosure unit for laying open the output data to the user terminals and the client terminal.

The user terminals have function for reproducing video clips and function for filming/recording video/audio content equipped internally or externally.

The video clip database stores video clip data for learning and additional information of the video clips such as the information of creators, types/purposes, target users, evaluators, methods of measuring learning achievement.

The user information database stores information of learners using the user terminals and teachers using the client terminals shown in Fig.1. It stores information of content of learning, curriculums, progress of learning, learning achievements in connection with the learners and stores information of authority and target of teaching and history of teaching in connection with the teachers.

The video clip edition unit stores in the video clip database video clip data and its additional information upon receipt of operation from the administrator terminals and the client terminals, or alternatively from the user terminals.

The user information edition unit stores in the user information database information of learners using the user terminals and teachers using the client terminals upon receipt of operation from the administrator terminals and the client terminals, or alternatively from the user terminals.

The distribution unit distributes to the user terminals video clips stored in the video clip database. The distribution unit distributes video clips which are adaptive to the respective users in terms of content, timing, volume, distribution format based on the additional information of the video clips stored in the video clip database and on the learning curriculums stored in the user information database (adaptive learning).

The progress management unit manages the respective users' progress of learning using the distributed video clips. The progress management unit manages the progress of learning based on the additional information of the video clips stored in the video clip database, on the learning curriculums stored in the user information database, on the output data received from the user terminals and on other information obtained (e.g. cases that learning is not completed, etc.)

The progress management unit may also notify the respective users of the learning content which they are supposed to learn, for example in the form of a To Do List.

The output receiving unit receives from the user terminals video clips filming the actions of the user in imitation of the actions shown in the distributed video clips for learning, which are regarded as the output of learning.

The output evaluating unit for evaluates the learning achievement of the received video clips (output data) based on a predetermined evaluation standard or evaluation method. It may employ an objective evaluation method in which the difference between the received video clips (output data) and the reference video clips (this may be the distributed video clips or others). Or it may employ a subjective evaluation method in which the output disclosure unit discloses the received video clips (output data) to the teacher or to the other users so as to receive their evaluation.

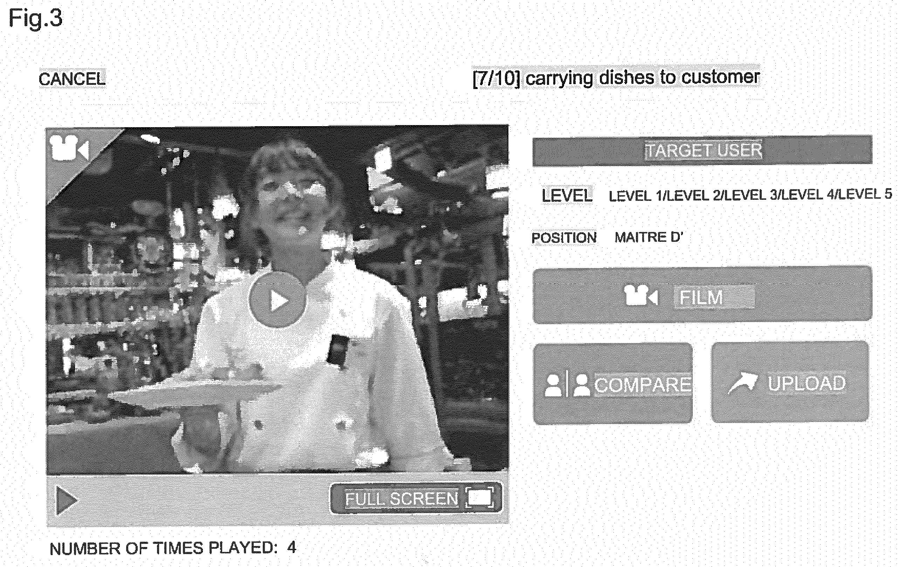

Fig.3 is a view showing an example of a screen display of a video clip used in the autonomous learning system using video clips according to the present invention.

As shown in the figure, the distributed video clips along with its additional information are reproduced and viewed on the screen of the user terminals. The distributed video clips may be stored in the user terminals such that the users can repeatedly view the video clips. Or it may be that the video clips need to be downloaded from the content server every time the users view them.

### Mode of Use

The autonomous learning system using video clips according to the present invention can be adopted for any kind of learning using small-unit and short-time video content. For example, the system can be adopted for many various of learning accompanying human actions such as learning of actions of serving customers, learning of giving speeches, learning of foreign languages, etc.

The administrator terminal show in Fig.1 is the terminal for the system administrator to operate and manage the content server and the client terminal is the terminal for the teachers to register/edit the video clips, to assign the video clips to the users, to manage the users' progress of learning, to evaluate/approve the output of learning and to manage the reuse of the output data.

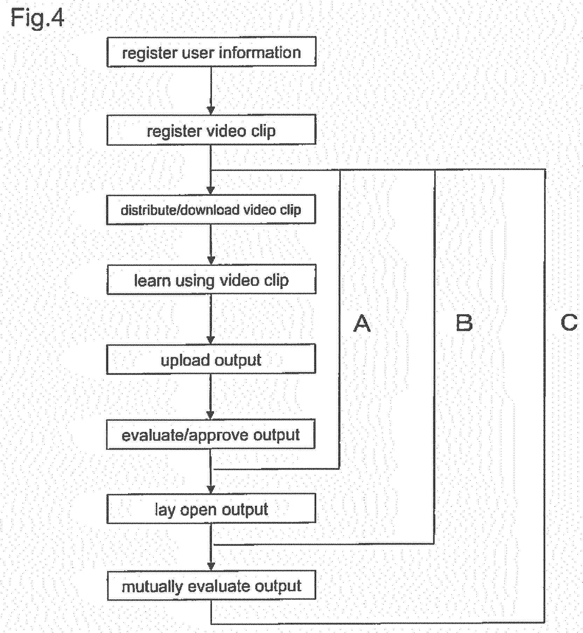

Fig.4 is a flow chart schematically showing the sequential steps of use of the autonomous learning system using video clips according to the present invention.

In Fig. 4, the system administrator or the teacher of the user (learner) access the content server using the administrator terminal or the client terminal and operate the user information edition unit to register and edit the user attribute information in the user information database as necessary.

The system administrator or the teacher of the user also access the content server using the administrator terminal or the client terminal and operate the video clip edition unit to register and edit the video clips , which are the teaching/learning material content, and its additional information in the video clip database as necessary.

The system administrator or the teacher of the user also access the content server using the administrator terminal or the client terminal to set the learning curriculums laying down which video clips are to be distributed to which users. In accordance with the learning curriculums set as such, the distribution unit and the progress management unit of the content server manages the information relating to the distribution thorough the output evaluation.

Accordingly, upon receipt of instruction from the administrator terminal, the client terminal or the user terminal, the system distributes the video clips registered in the video clip database to the user terminal.

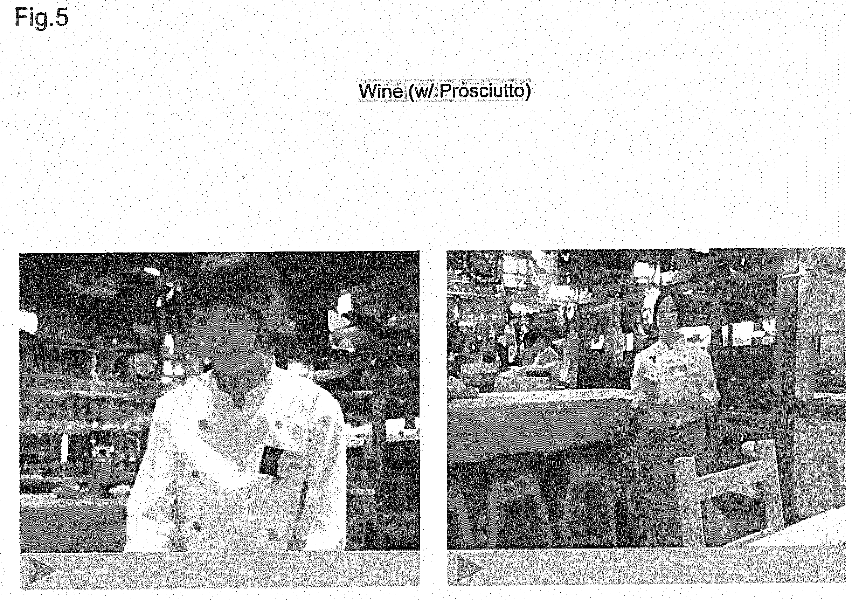

The user reproduces the video clips on the user terminal and gets down to learning. The video clips are reproduced on the user terminal, for example, in such a way as shown in Fig.3. After learning, the user produces output of the learning which presents his/her learning achievement. The "output" referred to here is a video produced by filming/recording the actions of the user in imitation of the actions shown/heard in the video clips. This means that also the output can be treated as a video clip. As shown in Fig.5 for example, the user terminal may reproduce on the screen the output video of the user' s own actions side by side with the video clip which is the teaching/learning materials so as to enhance learning effect.

The video/audio clips for learning may include the following types of clips.
(1) video clips explaining/demonstrating the actions to the learners.
(2) video clips showing the model actions for the learners to imitate.
(3) video clips which asks questions for the learners to make answers to them.

Responses to the above video/audio clips are (1) output presenting the understanding of the learner, (2) output in the form of videos of the learner's imitating the actions (3) output in the form of videos of learner's giving answers to the questions.

The user produces the output and operate the user terminal to upload it to the content server by way of its output receiving unit.

The evaluating unit of the content server evaluates the uploaded output in terms of whether or not the output proves the learner's achieving a certain level of skill. It may employ an evaluation method in which the difference between the uploaded output and the video clip which is the teaching/learning materials. Or it may employ an evaluation method in which the teacher views the uploaded output to make evaluation. In the latter case, the teacher reproduces the uploaded output on the client terminal and makes an evaluation or a judgment of its achievement.

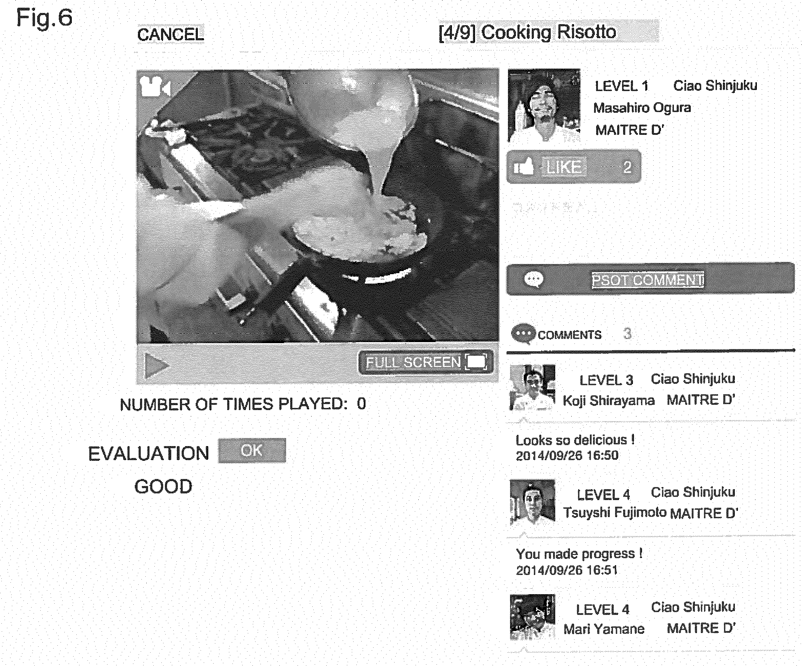

In case the teacher makes an evaluation, it is favorable that the system employs an interactive evaluation method in which the user and the teacher can exchange comments, as shown in Fig. 6 for example, so as to enhance learning effect and motivation of the user.

The output obtaining evaluation that the user has achieved a certain level of skill gets registered in the video clip database as a proven output. Such a proven output itself becomes teaching/learning materials for the other users, which can be distributed to the other users in the same way as the video clips initially registered in the video clip database.

As described in the above, in the autonomous learning system using video clips according to the present invention, since the output of learning produced by the user to present his/her learning achievement itself is a video clip, the proven output becomes a new teaching/learning materials in the form of a video clip. This means that a set of teaching/learning materials produces another set teaching/learning materials without the system administrator's or the teachers' taking any action in this novel and distinctive autonomous learning system (as indicated by the branch A of the flowchart in Fig.4).

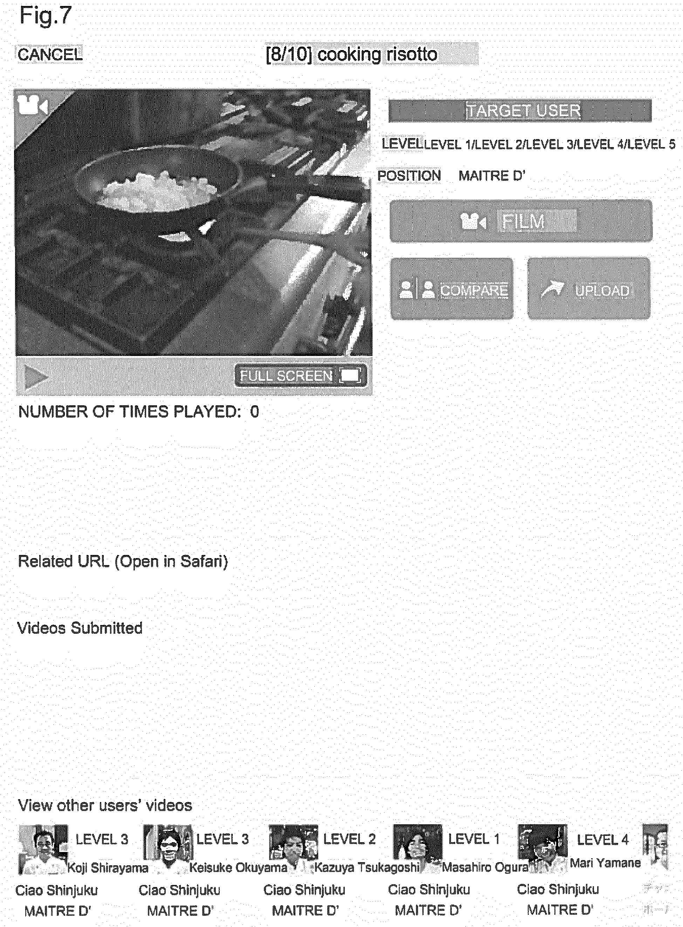

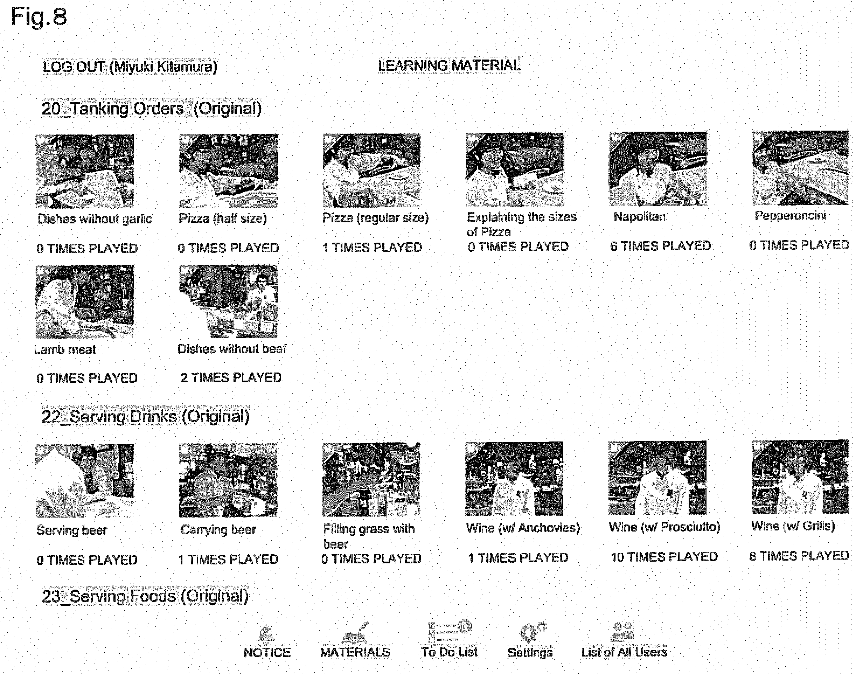

In the autonomous learning system using video clips according to the present invention, the output disclosure unit of the content server lays open the proven output in the form of a video clip to the users. Figs. 7 and 8 each shows an example of a screen display of such disclosure. The users are allowed to select their teaching/learning materials not only from the video clips provided by the system administrator or the teachers but also from the video clips which are the outputs produced by the other users. This enhances the convenience of the users as well as reduces the burden of the system administrator or the teachers who produce the teaching/learning materials (as indicated by the branch B of the flow chart in Fig.4).

The content server allows the users to give their comments or evaluation on the video clips which are the output produced by the other users. This creates an atmosphere in which the users share the learning achievement with each other as well as compete with each other such that the learning become more effective and the users get better motivated.

In the autonomous learning system using video clips according to the present invention, the process of making evaluation/approval of the users' output can be wholly or partially taken over by the users. This reduces the burden of making evaluation/approval (as indicated by the branch C of the flow chart in Fig.4). In case the whole process of making evaluation/approval of the users' output is taken over by the users, the system allows the users to learn autonomously and continuously without the teachers' teaching them.

In another embodiment of the autonomous learning system using video clips according to the present invention, the video clip database does not store any video clip data in its initial state. This means that the system administrator or the teachers do not produce/provide any video clip which is the teaching/learning material content.

In this case, the system administrator or the teachers initially provide formats of video clips. Given a format of video clip which reads "the actions of XX in ten seconds", for example, the users take the actions and film/record it to produce the output in the form of a video clip and upload it to the content server. In case the output is evaluated to be achieving a certain level of skill by the teacher of the other users, it gets stored in the video clip database as a video clip for learning. This means that this learning system is distinctively autonomous, in which once formats of video clips are given to the users, the users who are learners produce excellent teaching/learning material content by their own, which is laid open to be used for the other users' learning, thereby allowing further new teaching/learning material content to be produced.

Although embodiments and examples of the autonomous learning system using video/audio clips for learning are described in the above, no limitation of the scope of the present invention is thereby intended. Those skilled in the art would contemplate various alterations and modifications on the structures and functions of the server computers within the scope of the invention.

### Industrial Applicability

As shown in Figs. 1 to 8, the autonomous learning system using video/audio clips according to the present invention is realized by the OS, application software, databases, network systems and the like which are built on the hardware resources of computers comprising CPUs, memories, auxiliary storage devices, display devices, I/O devices and the like.

The system performs, using the above hardware resources, information processing by which the output of the learner in the form of a video/audio clip is evaluated and the output video clip which is evaluated to be achieving a certain level of skill is used as a new video/audio clip for learning. The present invention, as such, constitutes a creation of technical ideas utilizing a law of nature, which can be utilized in the filed of software and information communication and the like.

## Claims

1. An autonomous learning system using video/audio clips for learning comprising:
one or more user terminals having communication function, function for reproducing a video/audio clip for learning and function for generating output data corresponding to said video/audio clip and presenting a learning achievement of a learner by learning using said video/audio clip; and
a content server having
a video/audio clip database storing video/audio clip data,
a distribution unit distributing to the user terminals the video/audio clip data stored in said video/audio clip database,
a receiving unit receiving the output data sent from the user terminals and
an output evaluating unit evaluating the learning achievement of the received output data and storing in said video/audio clip database the output data achieving a certain level of skill as a new video/audio clip for learning.

2. The autonomous learning system using video/audio clips for learning according to Claim 1, wherein said output evaluating unit evaluates the received output data by receiving input of evaluation of the output data by an evaluator who has viewed the output data.

3. The autonomous learning system using video/audio clips for learning according to Claim 1, wherein said output evaluating unit evaluates the received output data based on a predetermined evaluation standard.

4. The autonomous learning system using video/audio clips for learning according to any one of Claims 1 to 3, wherein said content server lays open the output data achieving a certain level of skill to user terminals other than the user terminal which provided the output data.

5. The autonomous learning system using video/audio clips for learning according to Claim 1, wherein said content server lays open the output data received from one user terminal to other user terminals so as to receive evaluation of or comments on the output data from the other user terminals.

6. The autonomous learning system using video/audio clips for learning according to Claim 5, wherein said output evaluating unit evaluates the output data based on whether the evaluation of the received output data by other user terminals clears a predetermined standard.

7. The autonomous learning system using video/audio clips for learning according to Claim 1, wherein said video/audio clip database does not store any video/audio clip data in its initial state and begins to store the output data received from the user terminals and evaluated to be achieving a certain level of skill by said output evaluating unit as a video/audio clip for learning.

8. The autonomous learning system using video/audio clips for learning according to any one of Claims 1 to 7, wherein said content server further comprises a user information database storing user attribute information and learning curriculum information and a progress management unit distributing to the user video/audio clips for learning based on said learning curriculum information and managing the user's progress of learning.

9. The autonomous learning system using video/audio clips for learning according to any one of Claims 1 to 7, wherein said user terminals have function for filming/recording video/audio content equipped internally or externally so as to produce output data by filming/recording the actions of the user in imitation of the actions shown/heard in the video/audio clips for learning.
